# EUROPEAN PATENT SPECIFICATION

(11) **EP 0 837 999 B1**
(45) Date of publication and mention of the grant of the patent: **12.09.2001**
(21) Application number: 96923762.7
(22) Date of filing: 12.07.1996
(51) Int. Cl.: F16F 1/38

(54) **MOUNTING DEVICE AND PROCESS FOR MANUFACTURE THEREOF**
BEFESTIGUNGSVORRICHTUNG UND VERFAHREN ZU DEREN HERSTELLUNG
DISPOSITIF D'ASSEMBLAGE ET PROCEDE DE FABRICATION ASSOCIE

(30) Priority: 13.07.1995 JP 17716895
(43) Date of publication of application: 29.04.1998
(73) Proprietor: E.I. DU PONT DE NEMOURS AND COMPANY, Wilmington Delaware 19898 (US)
(72) Inventor: FUJITA, Susumu, Yokohama-shi,Kanagawa-ken 241 (JP)
(74) Representative: Jones, Alan John
(86) International application number: US9611636
(87) International publication number: WO9703307

(56) References cited:
- BE-A- 456 203
- US-A- 5 003 684
- PATENT ABSTRACTS OF JAPAN vol. 014, no. 127 (M-0947), 9 March 1990 & JP,A,01 320331 (KINUGAWA RUBBER IND CO LTD), 26 December 1989,
- PATENT ABSTRACTS OF JAPAN vol. 016, no. 242 (M-1259), 3 June 1992 & JP,A,04 054334 (BRIDGESTONE CORP), 21 February 1992,
- PATENT ABSTRACTS OF JAPAN vol. 95, no. 006 & JP,A,07 158675 (BRIDGESTONE CORP), 20 June 1995,
- PATENT ABSTRACTS OF JAPAN vol. 016, no. 145 (M-1233), 10 April 1992 & JP,A,04 004331 (TOYO TIRE & RUBBER CO LTD;OTHERS: 01), 8 January 1992,
- PATENT ABSTRACTS OF JAPAN vol. 018, no. 534 (M-1685), 11 October 1994 & JP,A,06 185558 (TOYODA GOSEI CO LTD), 5 July 1994,
- PATENT ABSTRACTS OF JAPAN vol. 016, no. 169 (M-1239), 23 April 1992 & JP,A,04 015331 (NISSAN MOTOR CO LTD), 20 January 1992,
- PATENT ABSTRACTS OF JAPAN vol. 018, no. 006 (M-1537), 7 January 1994 & JP,A,05 248467 (TOYODA GOSEI CO LTD), 24 September 1993,

## Description

### BACKGROUND OF THE INVENTION

### 1. Field of The Invention

The present invention relates to a mounting device which supports and secures an engine, a transmission, a suspension, or the like, to the body of a vehicle, at the same time damping out engine- or suspension-generated vibrations, as well as a process for the manufacture thereof.

### 2. Description of the Related Art

Mounting devices which support and secure an engine, a transmission, a suspension, or the like, to the body of a vehicle which have been long used previously have comprised rubber and like insulators held between a large and small metal cylinder.

However, to reduce the weight of an automobile and also to reduce cost, the use of a resin has been attempted so as to replace the metal in the outer cylinder with a resin.

Such a mounting device having an insulator placed between such a resin outer cylinder is manufactured by molding the insulator part from rubber and then injection molding a resin using the insulator part and the metal inner cylinder as the insert.

However, the conventional manufacturing process has faced problems in that injection molding using rubber which is a very elastic material, if carried out under high pressure, deformed the insulator part while molding even under a relatively low pressure not only providing molded articles with poor appearance, but also leading to a failure to obtain the mechanical properties with a resin.

Molding a resin insert has also faced problems in that for manufacturing a metal cylinder as an outer cylinder, the insulator part is subjected to sufficient compression behavior to increase its strength by annularly tensioning drawing the metal. But molding an insert from a resin requires providing the insulator part with compression behavior based only on the resin-characteristic shrinkage so that a molded article or an outer cylinder obtained by using a special insulator material had to become a very thick-walled molded article.

JP-A-07 158 675 discloses a mounting device and a process akin to the pre-characterizing clause of the claims 1 3 and 4, respectively, of the present Application.

It is an object of this invention to provide a mounting device which is light weight, excellent in durability and good in appearance and a process for the manufacture thereof.

### SUMMARY OF THE INVENTION

A mounting device includes an outer cylinder, an inner cylinder, and an elastic insulator part positioned between said outer cylinder and said inner cylinder to connect the outer cylinder and the inner cylinder. The outer cylinder is made of a resin and includes a molded first outer cylinder having an annular form , and a second outer cylinder molded on the outer circumference of the first outer cylinder characterized in that said first outer cylinder has at least one opening formed therein, and said second outer cylinder covers said opening in said first outer cylinder such that the opening is closed resulting in a more precompressed state of the elastic insulator part.

### BRIEF DESCRIPTION OF THE DRAWINGS

Figure 1 is a plan view showing an embodiment for the manufacturing stage of Example 1 of a mounting device of this invention.

Figure 2 is a plan view showing an embodiment for the manufacturing stage of Example 2 of a mounting device of this invention.

Figure 3 is a plan view showing the final embodiment of Example 1 of the mounting device of this invention.

### DETAILED DESCRIPTION

The present invention relates to a mounting device that supports and secures an engine, a transmission, a suspension, or the like, to the body of a vehicle while at the same time damping out engine- or suspension-generated vibrations, and a process for the manufacture thereof. Specifically the invention relates to a mounting device having an elastic insulator part placed between a resin outer cylinder and a metal or resin inner cylinder and a process for the manufacture thereof.

One process according to this invention for manufacturing a mounting device comprising an outer cylinder, an inner cylinder, an elastic insulator part which is located between said outer cylinder and inner cylinder, and having an outer annular part which is in contact with the inner circumferential face of said outer cylinder, an inner annular part in contact with the outer circumferential surface of said inner cylinder, the elastic insulator part having at least one connector for connecting said outer annular part and said inner annular part, the steps 1,2 and 3 according to the characterzising portion of claim 3. is characterized by

Another manufacturing process in accordance with this invention for manufacture of a mounting device comprising an outer cylinder, an inner cylinder, an elastic insulator part which is located between said outer cylinder and inner cylinder, and having an outer annular part which is in contact with an inner circumferential face of said outer cylinder, an inner annular part in contact with an outer circumferential surface of said inner cylinder, the elastic insulator part having at least one connector for connecting said outer annular part and said inner annular part, is characterized by the steps 1,2 and 3 according to the characterzising portion of claim 4.

The mounting device manufacture by this invention comprises molding the outer cylinder separately into a first outer cylinder and a second outer cylinder so as to have it provided with excellent strength and good appearance. A thin walled first outer cylinder is molded under relatively low pressure, and an insulator part is preconnected to the first outer cylinder to secure the insulator part, which allows molding the second outer cylinder under high pressure, resulting in a mounting device with good appearance.

Since the openings provided on the first outer cylinder, the outer annular section of the insulator are closed off when the second outer cylinder is molded, compression behavior can be applied to the insulator part without depending on the resin-inherent shrinkage alone, so as to permit manufacturing a high strength mounting device. This construction does not require the outer cylinder to be thicker walled than necessary. Since a resin is used instead of metal, the device is light weight and uses an outer cylinder which is not thick walled to make it even lighter weight than the conventional mounting devices made of a resin.

Preferred embodiments for this invention are described in detail by referring to the examples described in the attached drawings. These examples are used to explain this invention and in no way do they limit the scope of this invention.

### EXAMPLES

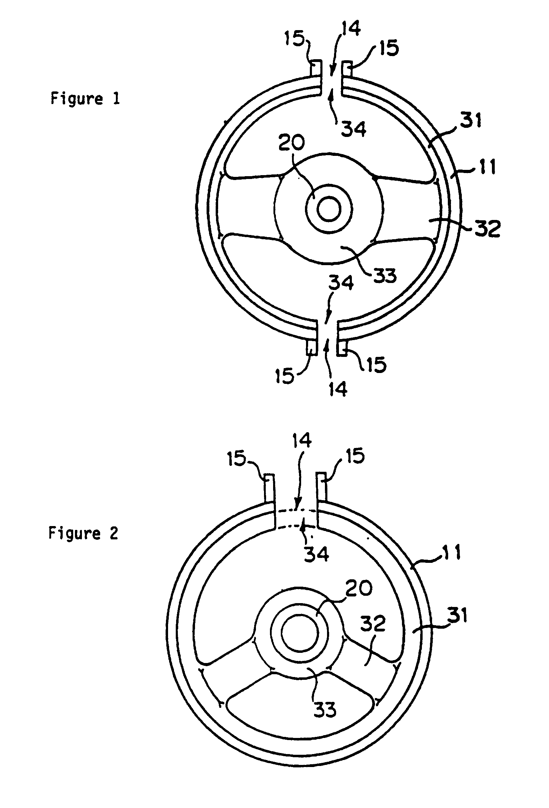

Examples of this invention are described by referring to Figures 1-3.

In the figures, 10 is an outer cylinder comprising a first outer cylinder 11 and a second outer cylinder 12 and is molded from a glass fiber reinforced thermoplastic resin. Preferred thermoplastic resins which meet the heat resistance and strength requirements are polyamides, polyesters, or polyphthalamides, and the like.

20 is a metal inner cylinder which can be obtained by machining a steel pipe. The inner cylinder 20 may be an article molded from a resin, such as a polyamide, if excellent sliding properties and high strength are assured.

30 is an insulator part which is molded from a natural rubber, a synthetic rubber, or the like elastomer, preferably molded from a blended rubber based on natural rubber with a diene rubber, such as styrene butadiene rubber, butadiene rubber, and the like, because they are outstanding in vibration isolation, preferably one molded from an ethylene-propylene-diene terpolymer (EPDM rubber) owing to outstanding heat resistance, as well as one molded from a chloroprene rubber owing to its combination of excellent vibration isolation and heat resistance.

The insulator part 30 comprises an outer annular part 31 which is bound to the inner circumferential face of the first outer cylinder II of outer cylinder 10, inner annular part 33 bound to the outer circumferential face of inner cylinder 20, link 32 which links the outer annular part 31 to the inner annular part 33. There should be one or more links 32 and their shape, size, and position are arbitrary within the range of not causing any problems in strength as illustrated in Figure 1 or Figure 2 with no particular limitation. Openings 34 and 14 are provided, respectively, on the outer annular part 31 and the first cylinder 11 without any restrictions as to the their numbers and positions, which may be provided at symmetrical positions 180 degrees apart from each other as given in Figure 1 or may be at a single position as shown in Figure 2. Openings are preferably provided as given in Figure 1 or Figure 2 considering the ease of molding and assembling and the strength limitations.

In Example 1, for the process for manufacturing a mounting device of this invention, in Step 1, insulator part 30 is molded from a rubber blend of a natural rubber base with a styrene butadiene rubber using a metal inner cylinder 20 as an insert, into a configuration as shown in Figure 1 or Figure 2 so as to have an outer annular part 31 provided with an opening 34.

The molding is carried out by compression molding under conditions of a mold temperature of 145-165°C and 20-60 minutes.

Molding can also be carried out by injection molding under conditions of a flow temperature of 175-185°C for 60 seconds - 15 minutes

The molding conditions vary somewhat depending on parts, shapes, gate positions, etc.

If a metal inner cylinder 20 is used, the surface of the inner cylinder 20, that face of the inner cylinder 20 coming in contact with the inner annular part 33, is preferably pretreated with an adhesive, such as a phenolic adhesive or the like, so as to increase the adhesion of the cylinder to the insulator part 30.

Next, in step 2, the insulator part 30 molded in step 1, along with the metal inner cylinder 20, are placed as an insert into a mold followed by injection molding an outer cylinder 11 having an opening 14 at a position corresponding to the opening 34 of the insulator part 30. Molding is carried out in this case so as to mold at the same time on the first outer cylinder 11 lugs 15 which project outward in the radial direction at both ends adjacent to opening(s) 14.

Injection molding is carried out under conditions of injection pressure of 400-450 kgf/cm² and a mold temperature of 100-120°C. The first outer cylinder is 2-3 mm in wall thickness. In order to increase the adhesion of the insulator part 30 to the first outer cylinder 11, the face which comes in contact with the outer annular part 31 of the first outer cylinder is preferably pretreated with an adhesive, such as a phenolic adhesive, or the like.

In steps 1 and 2, the first outer cylinder 11 and inner cylinder 20 are linked and integrated via insulator part 30. In step 3, a second outer cylinder 12 is molded using the integrated first cylinder 11, insulator part 30, and inner cylinder 20 as an insert; the integrated first outer cylinder 11, insulator part 30, and inner cylinder 20 are placed, with the two lugs being gripped, into a mold for molding the second outer cylinder 12. This is slightly larger in size than the first outer cylinder 11 with its opening 14 closed and the insulator part 30 with its opening 34 of the outer annular part 31 being closed, thereby injection molding the second outer cylinder 12 by applying compression to the insulator part with openings 14 and 34 being closed. The injection molding is carried out under conditions of an injection pressure of 800-1,000 kgf/cm² and a mold temperature of 110-120°C. The first outer cylinder is 2-3 mm in wall thickness.

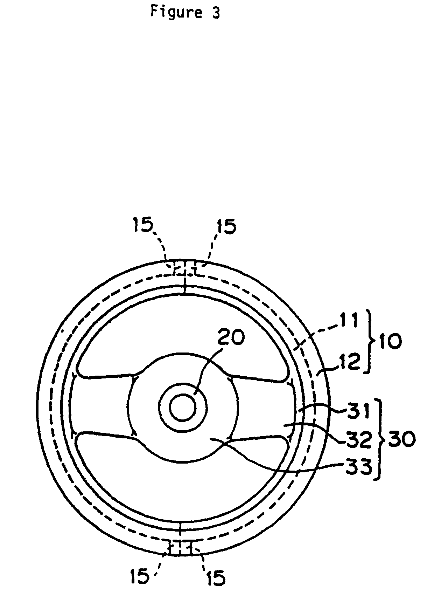

The resultant molded mounting device is illustrated by Figure 3.

In this example, the second outer cylinder 12 is molded not only to envelop the outer circumference of the first outer cylinder 11 including lugs 15, but also to extend around the side face of the first outer cylinder 11. In terms of the viewpoint of the strength alone, it should be sufficient if the second outer cylinder 12 is at least present on the outer circumference side of the first outer cylinder 11.

In another example, in the above first step, the first outer cylinder 11 is molded and then in the second step, insulator part 30 may be molded with the first outer cylinder 11 which has been molded and with the metal inner cylinder 20 as the insert. Step 3 is the same as the above.

As described above, the present invention can provide a resin-rubber mounting device which is lighter in weight than the conventional resin-rubber mounting devices, is good in appearance, and is durable as a metal-rubber mounting device.

The use of the manufacturing process of this invention makes it possible to mold the first outer cylinder and second outer cylinder from different resin materials, for example, using a high flow resin for the first outer cylinder, and a second cylinder may be molded from a resin with more emphasis on chemical resistance, appearance, and heat resistance.

## Claims

1. A mounting device comprising an outer cylinder (10) an inner cylinder (20), and an elastic insulator part (30) positioned between said outer cylinder (10) and said inner cylinder (20) to connect the outer cylinder and the inner cylinder, said outer cylinder (10) being made of a resin and comprised of a molded first outer cylinder (11) having an annular form and a second outer cylinder (12) molded on the outer circumference of the first outer cylinder (11), **characterized in that** said first outer cylinder (11) has at least one opening (14) formed therein, and said second outer cylinder (12) covers said opening (34) in said first outer cylinder such that the opening is closed resulting in a more precompressed state of the elastic insulator part.

2. A mounting device as set forth in Claim 1 wherein said first outer cylinder (11) is provided with lugs (15) which project outwardly in a radial direction at both ends adjacent to said opening.

3. A process for manufacturing a mounting device comprising an outer cylinder (10) made of a resin, an inner cylinder (20), an elastic insulator part (30) which is located between said outer cylinder (10) and inner cylinder (20), and having an outer annular part (31) which is in contact with the inner circumferential face of said outer cylinder (10), an inner annular part (33) in contact with the outer circumferential surface of said inner cylinder (20), the elastic insulator part (30) having at least one connector (32) for connecting said outer annular part (31) and said inner annular part (33), **characterized by**
Step 1 of molding, using said inner cylinder (20) as the insert, the insulator part (30) which has at least one opening (34) in said outer annular part (31);
Step 2 of molding, using the molded insulator part (30) with the inner cylinder (20) as an insert, a first outer cylinder (11) which forms part of said outer cylinder (10) and which has at least one opening (14) at a position or positions corresponding to the opening (s) (34) of the insulator part (30); and
Step 3 of molding by using said first outer cylinder (11), insulator part (30), and inner cylinder (20) as an insert, wherein the opening(s) (14) of the said first outer cylinder (11) and the opening(s) (34) of the outer annular part (31) of said insulator part (30) are closed by a second outer cylinder (12) forming part of said outer cylinder (10) and being located at least on the outer circumference of said first outer cylinder (11) resulting in a more precompressed state of the elastic insulator part.

4. A process for manufacture of a mounting device comprising an outer cylinder (10) made of a resin, an inner cylinder (20), an elastic insulator part (30) which is located between said outer cylinder (10) and inner cylinder (20), and having an outer annular part (31) which is in contact with an inner circumferential face of said outer cylinder (10), an inner annular part (33) in contact with an outer circumferential surface of said inner cylinder (20), the elastic insulator part (30) having at least one connector (32) for connecting said outer annular part (31) and said inner annular part (33), **characterized by**
Step 1 of molding a first outer cylinder (11) forming part of said outer cylinder (10) and having at least one opening (14);
Step 2 of molding, using said molded first outer cylinder (11) and the inner cylinder (20) as an insert, the insulator part (30) having an outer annular part (31) with an opening (34) at a position corresponding to the opening (14) provided on the first outer cylinder (11); and
Step 3 of molding by using said first outer cylinder (11), insulator part (30), and inner cylinder (20) as the insert, wherein the opening (14) of said first outer cylinder (11) and the opening (34) of the outer annular part (31) of said insulator part (30) are closed by a second outer cylinder (12) from a resin at least on the outer circumference of said first outer cylinder (11) resulting in a more precompressed state of the elastic insulator part (30).

## Patentansprüche

1. Befestigungsvorrichtung, die einen Außenzylinder (10), einen Innenzylinder (20) und ein elastisches Isolierteil (30) aufweist, das zwischen dem Außenzylinder (10) und dem Innenzylinder (20) angeordnet ist, um den Außenzylinder und den Innenzylinder zu verbinden, wobei der Außenzylinder (10) aus einem Kunstharz hergestellt wird und einen als Formteil hergestellten ersten äußeren Zylinder (11) mit einer Ringform und einen zweiten äußeren Zylinder (12) umfaßt, der auf dem Außenumfang des ersten äußeren Zylinders (11) geformt wird, **dadurch gekennzeichnet, daß** in dem ersten äußeren Zylinder (11) wenigstens eine Öffnung (14) gebildet wird und der zweite äußere Zylinder (12) diese Öffnung (34) in dem ersten äußeren Zylinder bedeckt, derartig, daß die Öffnung geschlossen ist, was zu einem stärker vorverdichteten Zustand des elastischen Isolatorteils führt.

2. Befestigungsvorrichtung nach Anspruch 1, bei welcher der erste äußere Zylinder (11) mit Ansätzen (15) versehen ist, die an beiden Enden im Anschluß an die Öffnung in Radialrichtung nach außen vorstehen.

3. Verfahren zur Herstellung einer Befestigungsvorrichtung, die folgendes aufweist: einen Außenzylinder (10) aus einem Kunstharz, einen Innenzylinder (20), ein elastisches Isolatorteil (30), das sich zwischen dem Außenzylinder (10) und dem Innenzylinder (20) befindet und das folgendes hat: ein äußeres ringförmiges Teil (31), das mit der inneren Umfangsfläche des Außenzylinders (10) in Kontakt ist, ein inneres ringförmiges Teil (33), das mit der äußeren Umfangsfläche des Innenzylinders (20) in Kontakt ist, wobei das elastische Isolatorteil (30) wenigstens einen Verbinder (32) zum Verbinden des äußeren ringförmigen Teils (31) und des inneren ringförmigen Teils (33) hat, **gekennzeichnet durch**:
Schritt 1 des Formungsvorgangs, bei dem unter Verwendung des Innenzylinders (20) als Einsatz das Isolatorteil (30) geformt wird, das wenigstens eine Öffnung (34) in dem äußeren ringförmigen Teil (31) hat,
Schritt 2 des Formungsvorgangs, bei dem unter Verwendung des geformten Isolatorteils (30) mit dem Innenzylinder (20) als Einsatz ein erster äußerer Zylinder (11) geformt wird, der Bestandteil des Außenzylinders (10) ist und der wenigstens eine Öffnung (14) an einer Position oder an Positionen hat, die der/den Öffnung/en (34) des Isolatorteils (30) entspricht/entsprechen, und
Schritt 3 des Formungsvorgangs, bei dem unter Verwendung des ersten äußeren Zylinders (11), des Isolatorteils (30) und des Innenzylinders (20) als Einsatz, wobei die Öffnung/en (14) des ersten äußeren Zylinders (11) und die Öffnung/en (34) des äußeren ringförmigen Teils (31) des Isolatorteils (30) durch einen zweiten äußeren Zylinder (12), der Bestandteil des Außenzylinders (10) ist und der sich wenigstens auf dem Außenumfang des ersten äußeren Zylinders (11) befindet, geschlossen sind, was zu einem stärker vorverdichteten Zustand des elastischen Isolatorteils führt.

4. Verfahren zur Herstellung einer Befestigungsvorrichtung, die folgendes aufweist: einen Außenzylinder (10) aus einem Kunstharz, einen Innenzylinder (20), ein elastisches Isolatorteil (30), das sich zwischen dem Außenzylinder (10) und dem Innenzylinder (20) befindet und das folgendes hat: ein äußeres ringförmiges Teil (31), das mit der inneren Umfangsfläche des Außenzylinders (10) in Kontakt ist, ein inneres ringförmiges Teil (33), das mit der äußeren Umfangsfläche des Innenzylinders (20) in Kontakt ist, wobei das elastische Isolatorteil (30) wenigstens einen Verbinder (32) zum Verbinden des äußeren ringförmigen Teils (31) und des inneren ringförmigen Teils (33) hat, **gekennzeichnet durch**:
Schritt 1 der Formung eines ersten äußeren Zylinders (11), der Bestandteil des Außenzylinders (10) ist und in dem sich wenigstens eine Öffnung (14) befindet,
Schritt 2 des Formungsvorgangs, bei dem unter Verwendung des geformten ersten äußeren Zylinders (11) und des Innenzylinders (20) als Einsatz das Isolatorteil (30) geformt wird, das einen äußeren ringförmigen Teil (31) mit einer Öffnung (34) an einer Position hat, die der Öffnung (34) entspricht, die in dem ersten äußeren Zylinder (11) vorhanden ist, und
Schritt 3 des Formungsvorgangs, bei dem unter Verwendung des ersten äußeren Zylinders (11), des Isolatorteils (30) und des Innenzylinders (20) als Einsatz, wobei die Öffnung (14) des ersten äußeren Zylinders (11) und die Öffnung (34) des äußeren ringförmigen Teils (31) des Isolatorteils (30) durch einen zweiten äußeren Zylinder (12) aus einem Kunstharz auf wenigstens dem Außenumfang des ersten äußeren Zylinders (11) geschlossen sind, was zu einem stärker vorverdichteten Zustand des elastischen Isolatorteils (30) führt.

## Revendications

1. Dispositif d'assemblage comprenant un cylindre externe (10), un cylindre interne (20) et une partie isolante élastique (30) positionnée entre ledit cylindre externe (10) et ledit cylindre interne (20) pour relier le cylindre externe et le cylindre interne, ledit cylindre externe (10) étant composé d'une résine et comprenant un premier cylindre externe moulé (11) de forme annulaire et un deuxième cylindre externe (12) moulé sur la circonférence externe du premier cylindre externe (11), **caractérisé en ce que** ledit premier cylindre externe (11) comporte au moins une ouverture (14) qui y est formée, ledit deuxième cylindre externe (12) recouvrant ladite ouverture (34) dans ledit premier cylindre externe, de sorte que l'ouverture est fermée, établissant un état à précompression accrue de la partie isolante élastique.

2. Dispositif d'assemblage selon la revendication 1, dans lequel ledit premier cylindre externe (11) comporte des pattes (15) débordant vers l'extérieur dans une direction radiale au niveau des deux extrémités adjacentes à ladite ouverture.

3. Procédé de fabrication d'un dispositif d'assemblage comprenant un cylindre externe (10) composé d'une résine, un cylindre interne (20), une partie isolante élastique (30), agencée entre ledit cylindre externe (10) et ledit cylindre interne (20), et comportant une partie annulaire externe (31), en contact avec la face circonférentielle interne dudit cylindre externe (10), une partie annulaire interne (33) en contact avec la surface circonférentielle externe dudit cylindre interne (20), la partie isolante élastique (30) comportant au moins un connecteur (32) pour connecter ladite partie annulaire externe (31) et ladite partie annulaire interne (33), **caractérisé par**
l'étape 1 de moulage, utilisant ledit cylindre interne (20) comme insert, la partie isolante (30) comportant au moins une ouverture (34) dans ladite partie annulaire externe (31);
l'étape 2 de moulage, utilisant la partie isolante moulée (30) avec le cylindre interne (20) comme insert, un premier cylindre externe (11) faisant partie dudit cylindre externe (10) et comportant au moins une ouverture (14) au niveau d'une position ou de positions correspondant à l'ouverture (aux ouvertures) (34) de la partie isolante (30); et
l'étape 3 de moulage, utilisant ledit premier cylindre externe (11), ladite partie isolante (30) et ledit cylindre interne (20) comme insert, l'ouverture (les ouvertures) (14) dudit premier cylindre externe (11) et l'ouverture (les ouvertures) (34) de la partie annulaire externe (31) de ladite partie isolante (30) étant fermée(s) par un deuxième cylindre externe (12) faisant partie dudit cylindre externe (10) et étant agencé au moins sur la circonférence externe dudit premier cylindre externe (11), établissant un état à précompression accrue de la partie isolante élastique.

4. Procédé de fabrication d'un dispositif d'assemblage comprenant un cylindre externe (10) composé d'une résine, un cylindre interne (20), une partie isolante élastique (30) agencée entre ledit cylindre externe (10) et ledit cylindre interne (20) et comportant une partie annulaire externe (31), en contact avec une face circonférentielle interne dudit cylindre externe (10), une partie annulaire interne (33) en contact avec une surface circonférentielle externe dudit cylindre interne (20), la partie isolante élastique (30) comportant au moins un connecteur (32) pour connecter ladite partie annulaire externe (31) et ladite partie annulaire interne (33), **caractérisé par**
l'étape 1 de moulage d'un premier cylindre externe (11), faisant partie dudit cylindre externe (10) et comportant au moins une ouverture (14),
l'étape 2 de moulage, utilisant ledit premier cylindre externe moulé (11) et ledit cylindre interne (20) comme insert, la partie isolante (30) comportant une partie annulaire externe (31) avec une ouverture (34) au niveau d'une position correspondant à l'ouverture (14) agencée sur le premier cylindre externe (11); et
l'étape 3 de moulage, utilisant ledit premier cylindre externe (11), la partie isolante (30), et le cylindre interne (20) comme insert, l'ouverture (14) dudit premier cylindre externe (11) et l'ouverture (34) de la partie annulaire externe (31) de ladite partie isolante (30) étant fermées par un deuxième cylindre externe (12) composé d'une résine et agencé au moins sur la circonférence externe dudit premier cylindre externe (11), établissant un état à précompression accrue de la partie isolante élastique (30).
